# EUROPEAN PATENT SPECIFICATION

(11) **EP 4 260 682 B1**
(45) Date of publication and mention of the grant of the patent: **29.10.2025**
(21) Application number: 22168507.6
(22) Date of filing: 14.04.2022
(51) Int. Cl.: A01G 7/04

(54) **LIGHTING METHOD FOR PROMOTING ACCUMULATION OF SECONDARY METABOLITES IN CHELIDONIUM MAJUS PLANTS**
BELEUCHTUNGSVERFAHREN ZUM FÖRDERN DER AKKUMULATION VON SEKUNDÄRMETABOLITEN IN CHELIDONIUM-MAJUS-PFLANZEN
PROCÉDÉ D'ÉCLAIRAGE POUR PROMOUVOIR L'ACCUMULATION DE MÉTABOLITES SECONDAIRE DANS DES PLANTS DE CHELIDONIUM MAJUS

(43) Date of publication of application: 18.10.2023
(73) Proprietor: Lithuanian Research Centre for Agriculture and Forestry, 58344 Kedainiai distr. (LT)
(72) Inventor: Virsile, Akvile, LT-58344 Kedainiai distr. (LT); Samuoliene, Giedre, LT-58344 Kedainiai distr. (LT); Brazaityte, Ausra, LT-58344 Kedainiai distr. (LT); Miliauskiene, Jurga, LT-58344 Kedainiai distr. (LT); Sutuliene, Ruta, LT-58344 Kedainiai distr. (LT); Haimi, Perttu-Juhani, LT-58344 Kedainiai distr. (LT); Novickovas, Algirdas, LT-58344 Kedainiai distr. (LT); Jankauskiene, Jule, LT-58344 Kedainiai distr. (LT)
(74) Representative: Zaboliene, Reda

(56) References cited:
- EP-A1- 3 782 457
- CN-A- 103 518 597
- KR-A- 20190 092 117

## Description

### TECHNICAL FIELD

The subject matter herein relates to technical field of medicinal plant cultivation technologies in controlled environment agriculture systems, particularly light regulation method, including red, blue and UVA light for promoting accumulation of secondary metabolites (alkaloids) in *Chelidonium majus* plants.

### BACKGROUND

*Chelidonium majus* is a perennial herbaceous flowering plant in family *Papaveraceae,* widely used as phytomedicine. *Chelidonium majus* is known to produce a broad range of secondary metabolites, ensuring its therapeutic properties. The main constituents of *C*. *majus* responsible for biological properties are isoquinoline alkaloids such as chelidonine, chelerythrine, sanguinarine, coptisine, berberine etc. They are reported to have anti-inflammatory, antimicrobial, antibacterial, antiviral, immunomodulatory, anticancer, choleretic, hepatoprotective, and analgesic properties.

The market demand for biologically active ingredients from these plants is increasing, and the indoor cultivation of medicinal plants offers several benefits over collection of wild plants, e.g., reliable supply, standardized and improved production, and certainty of botanical identity. Indoor cultivation of *C*. *Majus* in controlled environment cultivation systems (plant factories, vertical farming) can obtain plant raw materials with stable content and yield of medicinal ingredients in all seasons and several times a year. The reason is, that environmental factors, including light, temperature, humidity and nutrition in controlled environment cultivation systems are constant, stable and can be tailored to enhance growth and/or secondary metabolite contents in plants. Light is one of the most relevant environmental factors affecting plant functioning. It is both pivotal source of energy for photosynthesis, and important photomorphogenetic regulator of plant growth and development, which plays a significant role in regulation of plant metabolism processes.

It is widely known and published in scientific literature, that combinations of light parameters (spectrum, intensity, duration) can modulate plant growth and development and is efficient enhancing specialized metabolite content. Although, the light impacts are species and certain metabolite specific, therefore cannot be generalized (Appolloni et al., 2021 DOI 10.1002/jsfa.11513). It was earlier disclosed WO2014085626A1 (2013) the method for applying light to plants and plant parts (such as flowers, fruits) to modulate pigment accumulation, (i.e., color), stature, photomorphogenic responses, nutraceutical content, flavor, and/or aroma of plants or plant parts. However, this and another disclosed method WO2004103060A1 (2004) of altering the level of at least one phytochemical in a plant cell comprising chlorophyll or in plant tissue comprising chlorophyll by irradiating plant cell or plant tissue with light of at least one wavelength selected from the range of wavelengths from 400nm to 700nm, both do not include UVA (320-400 nm) light region. WO2020232412A1 (2020) employs red and blue light combination with mechanical injury of leaves or other plant structures, and/or administration of plant defense hormones to the plants to enhance plant derived compounds, including medicinal compounds, but this method does not include UVA light. Other inventions for plant treatment with light also include UVA light region, however, they are dedicated to different plants and different phytochemical regulation: WO2014037860A1 (2013) nutritional compounds in edible plants; EP3902391A1 (2021) secondary metabolites of cannabis plants; EP3871490A1 (2021) dedicated to increase functional material resveratrol in plants; EP3782457A1 (2021) employs UVA light to improve growth and phytochemicals (include carotenoids, flavonoids, and phenols); EP3834605A2 (2021) uses UV and UVA light to increase least one of the total phenolic content and antioxidant capacity of the plant; EP3616499A1 (2020) uses UV light to induce phenolic compound (polyphenol) accumulation; US2021289710A1 (2021) employs UV-B light to increase phytochemicals in Labiatae plant; WO2007004480A1 (2007) method discloses producing a large amount of hypericin, and glycyrrhetinic acid or its derivative in plants of genus Otocillaceae under the exposure of light photosynthetic flux density or wavelength.

CN103518597 describes an off-season pot-cultivation method for special-purpose breed of *Paeonia rockii.* Technology integrates seedling transplantation bags, potting light substrate, plant growth lamp lighting supplementation, terrestrial heat lines, growth regulating agents, increased terrestrial heat line temperature, flowerpot plastic film mulching and seedling rapid propagation. However, this method is provided for different plant, from other family than *Chelidonium majus* and does not use UV-A light for plant material enrichment with specific alkaloids.

### BRIEF DESCRIPTION OF THE INVENTION

The invention is achieved with the appended claims.

Proposed method distinguishes from previous by the plant (Chelidonium majus) and its compounds (isoquinoline alkaloids) and their enhancement in plant material by the combination of blue, red and UVA light at certain intensity and duration. To our knowledge, such light impact on isoquinoline alkaloids (chelidonine, chelerythrine, sanguinarine, coptisine, berberine etc.) were not published.

Proposed method is dedicated for controlled environment agriculture (CEA) systems, like growth chamber, plant factories, vertical farming, where plants are cultivated under artificially controlled light, temperature, humidity, nutrition conditions with natural light absent. The essence of the method is the impact of the combination of specific light wavelengths and their duration at optimized intensity on pharmaceutically important isoquinoline alkaloid accumulation in *Chelidonium majus* plants. The method is based on light emitting diode (LED) lighting technology, but its application is not limited to. This method (set of parameters, lighting recipe) can be introduced into existing controllable parameter plant lighting units, the lighting unit can be produced according to this set of parameters and employed for Chelidonium plant lighting in controlled environment agricultural systems. As the result, Chelidonium plants will accumulate up to 40% more of at least one of isoquinoline alkaloids in their material and this will have no negative impact on plant growth.

In the embodiment is provided a method for increasing an amount of the alkaloids in a plant, wherein the method comprises cultivating a *Chelidonium majus* plant in the controlled environment agricultural systems. The *Chelidonium majus* plant is exposed to basal lighting spectrum, consisting of red (R) and blue (B) lighting and is supplemented with UVA light and/or violet light. Experimental data shows that at least one of the total isoquinoline alkaloid content of the plant is increased

Blue light has wavelength approximately 455 ± 15 nm and the amount of blue light is from 5 to 15 % of total photosynthetic photon flux density. Red light has wavelength approximately 660 ± 15 nm and the amount of red light is from 85 to 95 % of total photosynthetic photon flux density. *Chelidonium majus* plant is exposed to red and blue lights for 16 h photoperiod.

UVA light has wavelength within the range of approximately 340nm to 400nm, preferably 385-390 nm light. Alternatively violet light which has wavelength within the range of approximately 400nm to 405nm, preferably 402 nm. UVA and/or violet light has intensity of 1 to 2 mW cm⁻² for 8h photoperiod. UVA-violet light photoperiod is allocated in center of the photoperiod of basal lighting photoperiod.

The lighting method is applied for *Chelidonium majus* plants from sowing or seedling stage and last until plant biomass growth reaches plato phase, but not less than 30 days from sowing time.

The accumulation of alkaloids, such as chelidonine, chelerythrine, sanguinarine, coptisine, berberine, in *Chelidonium majus* plants is observed.

### BRIEF DESCRIPTION OF DRAWINGS

Fig. 1A illustrates alkaloid contents in *Chelidonium majus* fresh material, cultivated under different UVA wavelengths, supplementing basal lighting spectrum, consisting of red (R) and blue (B) wavelengths. HPS - wide spectrum High pressure sodium lamps for reference.
Fig. 1B illustrates fresh weight and dry matter content of *Chelidonium majus* plants, cultivated under different UVA wavelengths, supplementing basal lighting spectrum, consisting of red (R) and blue (B) wavelengths. HPS - wide spectrum High pressure sodium lamps for reference.
Fig. 2A illustrates the impact of the photoperiod (duration) of UVA light, supplementing basal red and blue light (16 h photoperiod) on alkaloid contents in *Chelidonium majus* material.
Fig. 2B illustrates the impact of the photoperiod (duration) of UVA light, supplementing basal red and blue light (16 h photoperiod) on fresh weight and dry matter of *Chelidonium majus* plants.

### DETAILED DESCRIPTION OF THE INVENTION

Chelidonium plant lighting method comprises basal lighting containing from 5 to 15% of blue (455±15 nm) and from 85 to 95% of red (660±15 nm) light at total PPFD (Photosynthetic photon flux density) from 200 to 250 µmol m⁻² s⁻¹ at 16 h photoperiod. Basal lighting is supplemented with UVA 385-390 nm light and/or alternatively 400-405 nm violet light at intensity of 1 to 2 mW cm⁻² for 8h photoperiod. 8 h of UVA-violet light photoperiod is allocated in center of the photoperiod of basal lighting photoperiod (Table 1).

This lighting method is applied for *Chelidonium majus* plants from sowing or seedling stage (first true leaf developed; when seedling cultivated under other types of artificial illumination) and last until plant biomass growth reaches plato phase, but not less than 30 days from sowing time.

**Table 1**

| | | Wavelenght, nm | Intensity* | % from total PPFD (250 µmol m² s⁻¹⁾ | Photoperiod |
|---|---|---|---|---|---|
| Basal lighting | Blue | 455±15 nm | 25 µmol m⁻² s⁻¹ | 10% | 16h |
| | Red | 660±15 nm | 225 µmol m² s⁻¹ | 90% | 16h |
| UVA light, supplemental to basal | UVA | 385-390 nm | 1 to 2 mW cm⁻² | * | 8h (in the center of 16 h photoperiod) |
| Alternatively | | | | | |
| Violet light supplemental to basal. | UVA-Violet | 400-405 nm | 1 to 2 mW cm⁻² | * | 8h (in the center of 16 h photoperiod) |

| | | | | | |
|---|---|---|---|---|---|
| *PPFD - Photosynthetically active photon flux density (400-700 nm) - intensity, measured in µmol m⁻² s⁻¹; UVA (385-390 nm) wavelengths are not included in the PPFD flux. Violet (400-405 nm) is on the edge of PPF and here is equated to UV-A and both intensity measured in irradiance (mW cm⁻²) units. | | | | | |

Other (background) cultivation conditions: cultivation performed in controlled environment cultivation system (growth chamber, plant factory, vertical farming). Day/night temperatures of 21 ± 2/17 ± 2 °C were established and relative humidity of 50-60%. In embodiment experiments, *Chelidonium majus* plants cultivated in a peat substrate (Profi 1, JSC Durpeta, Lithuania) (pH 6), but the light treatment method is valid also on hydroponic cultivation systems. The average amounts of nutrients (mg l^{- 1}) in the substrate were as follows: N, 110; P2O5, 50; K2O, 160. The microelements Fe, Mn, Cu, B, Mo and Zn were also present. Electrical conductivity (EC) varied between 2.0 and 2.5 m S cm-1 (± 0.03 m S cm⁻¹ From the third week, twice per week fertilized with NPK 3-1-3 liquid fertilizer. *Chelidonium majus* seeds sown in peat substrate and germinated under wide spectrum high pressure sodium (HPS) lamps. At seedling stage (first true leaf developed) lighting treatment method to promote alkaloid accumulation in plant material started and continued for 30 days.

### THE RESULTS OF EMBODIMENT EXPERIMENTS

The results of embodiment experiments disclose, how light parameters affect alkaloid contents in *Chelidonium majus* leaves without negative impact on plant growth. The preferred embodiment discloses how light parameters affect isoquinoline alkaloid contents in Chelidonium majus leaves.

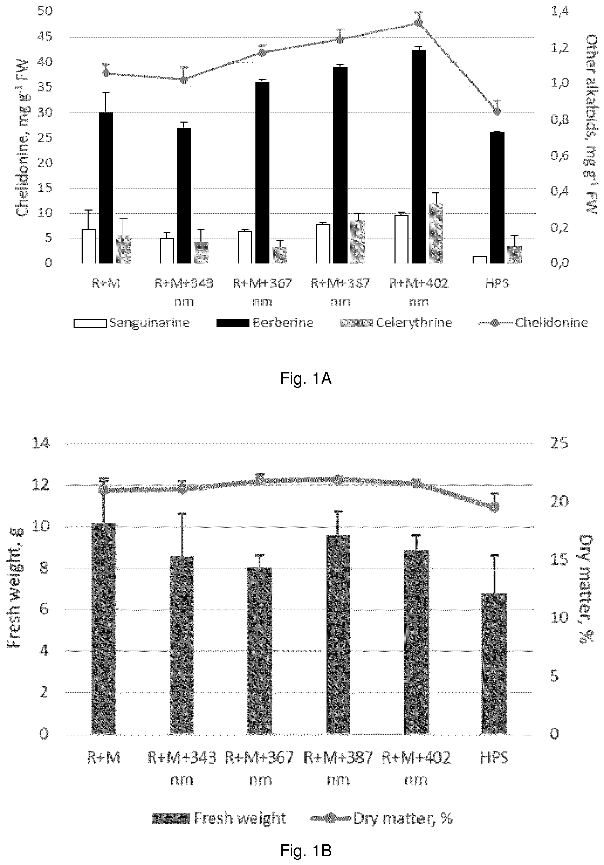

First embodiment experiment (Fig. 1 A and B) demonstrates, how different supplemental UVA wavelengths affect alkaloid contents in *Chelidonium majus* leaves, when applied at 1 mWcm⁻¹ and 16 h photoperiod. Basal lighting - as indicated in experiment description above. Under the exposure of 387 nm UVA light, supplementing red and blue light basal spectrum, chelidonine contents were determined 18% higher, sanguinarine - 16%, berberine - 30%, chelerythrine - 50% higher, compared to basal R+M treatment without supplemental UVA. Compared to wide spectrum High pressure sodium lamp treatment at the same PPFD and duration, chelidonine contents were 48%, sanguinarine - 5.5 times higher. 402 nm violet light, supplementing red and blue light basal spectrum, resulted in 27% higher chelidonine, sanguinarine and berberine - 42% higher, chelerythrine - 106% higher, compared to basal R+M treatment without supplemental UVA. Compared to wide spectrum High pressure sodium lamp treatment at the same PPFD and duration, chelidonine contents were 48%, sanguinarine - 5.5 times higher. The results in Fig.1A present, that different supplemental UVA wavelengths do not have significant suppressive impact on Chelidonium biomass accumulation and dry matter percentage.

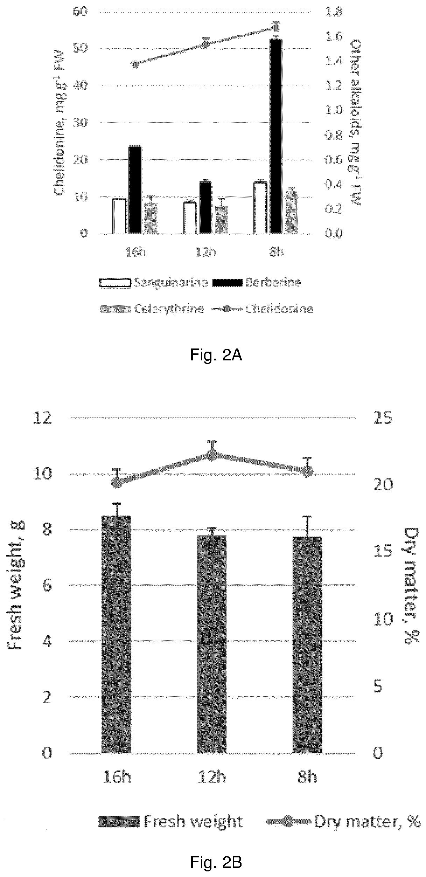

Second embodiment experiment (Fig. 2 A and B) demonstrate, how the duration of supplemental UVA (387 nm; 1 mWcm⁻¹ intensity) affect alkaloid contents in *Chelidonium majus* leaves. When the duration of supplemental UVA light was decreased form 16 h (Basal lighting photoperiod) to 8 h UVA photoperiod, when basal lighting remains at 16h, resulted in 21% chelidonine, 60% higher sanguinarine, 160% higher berberine and 40% higher celerythrine, contents with no negative impact of fresh plant weight and dry matter contents.

Following these results, the lighting method for *Chelidonium majus* for enhancement of secondary metabolites (alkaloids) was proposed.

Such increase in Chelidonium alkaloid quantity, which are of pharmaceutical importance, highly enhance the value of cultivated material and alkaloid yield from cultivation area, what promises increased earnings for the grower.

## Claims

1. A method for increasing an amount of the alkaloids in a plant, the method comprising:
cultivating a *Chelidonium majus* plant in the controlled environment agricultural systems,
wherein the *Chelidonium majus* plant is exposed to basal lighting spectrum, consisting of red (R) and blue (B) lighting,
wherein basal lighting is supplemented with UVA light and/or violet light,
wherein the lighting method is applied for *Chelidonium majus* plants from sowing or seedling stage and last until plant biomass growth reaches plato phase, but not less than 30 days from sowing time, and
whereby at least one of the total isoquinoline alkaloid content of the plant is increased.

2. The method according to claim 1, wherein blue light has wavelength approximately 455 ± 15 nm and the amount of blue light is from 5 to 15 % of total photosynthetic photon flux density.

3. The method according to claim 1, wherein red light has wavelength approximately 660 ± 15 nm and the amount of red light is from 85 to 95 % of total photosynthetic photon flux density

4. The method according to claim 1, wherein UVA light has wavelength within the range of approximately 340nm to 400nm, preferably 385-390 nm light.

5. The method according to claim 1, wherein violet light which has wavelength within the range of approximately 400nm to 405nm, preferably 402 nm.

6. The method according to any of preceding claims, wherein *Chelidonium majus* plant is exposed to red and blue lights for 16 h photoperiod.

7. The method according to any of preceding claims, wherein UVA and/or violet light has intensity of 1 to 2 mW cm⁻² for 8h photoperiod.

8. The method according to any of preceding claims, wherein UVA-violet light photoperiod is allocated in center of the photoperiod of basal lighting photoperiod.

9. The method according to any of preceding claims, wherein day/night temperatures of 21 ± 2/17 ± 2 °C.

10. The method according to any of preceding claims, wherein the lighting is applied for Chelidonium plant in controlled environment agricultural systems.

11. The method according to any of preceding claims, wherein secondary metabolites are alkaloids.

12. The method according to claim 11, wherein alkaloids are isoquinoline alkaloids.

13. The method according to claim 12, wherein isoquinoline alkaloids are selected from the group comprising chelidonine, chelerythrine, sanguinarine, coptisine, berberine.

## Patentansprüche

1. Ein Verfahren zur Erhöhung des Gehalts an Alkaloiden in einer Pflanze, wobei das Verfahren umfasst:
Kultivieren einer *Chelidonium* majus-Pflanze in Agrarsystemen mit kontrollierter Umgebung,
wobei die *Chelidonium* majus-Pflanze einem basalen Lichtspektrum ausgesetzt wird, das aus roter (R) und blauer (B) Beleuchtung besteht,
wobei die basale Beleuchtung mit UVA-Licht und/oder violettem Licht ergänzt wird,
wobei das Beleuchtungsverfahren für *Chelidonium* majus-Pflanzen vom Aussaat- oder Keimlingsstadium an angewendet wird und andauert, bis das Pflanzenbiomassewachstum eine Plateauphase erreicht, aber nicht weniger als 30 Tage ab dem Zeitpunkt der Aussaat, und
wodurch mindestens der Gesamtgehalt an Isochinolinalkaloiden der Pflanze erhöht wird.

2. Das Verfahren nach Anspruch 1, wobei das blaue Licht eine Wellenlänge von ungefähr 455 ± 15 nm hat und der Anteil des blauen Lichts 5 bis 15 % der gesamten photosynthetischen Photonenflussdichte beträgt.

3. Das Verfahren nach Anspruch 1, wobei das rote Licht eine Wellenlänge von ungefähr 660 ± 15 nm hat und der Anteil des roten Lichts 85 bis 95 % der gesamten photosynthetischen Photonenflussdichte beträgt.

4. Das Verfahren nach Anspruch 1, wobei das UVA-Licht eine Wellenlänge im Bereich von ungefähr 340 nm bis 400 nm, vorzugsweise 385-390 nm Licht, aufweist.

5. Das Verfahren nach Anspruch 1, wobei das violette Licht eine Wellenlänge im Bereich von ungefähr 400 nm bis 405 nm, vorzugsweise 402 nm, aufweist.

6. Das Verfahren nach einem der vorhergehenden Ansprüche, wobei die *Chelidonium* majus-Pflanze einer 16-stündigen Photoperiode mit rotem und blauem Licht ausgesetzt wird.

7. Das Verfahren nach einem der vorhergehenden Ansprüche, wobei das UVA- und/oder violette Licht eine Intensität von 1 bis 2 mW cm⁻² für eine 8-stündige Photoperiode aufweist.

8. Das Verfahren nach einem der vorhergehenden Ansprüche, wobei die Photoperiode des UVA-violetten Lichts in der Mitte der Photoperiode der basalen Beleuchtung angeordnet ist.

9. Das Verfahren nach einem der vorhergehenden Ansprüche, wobei die Tag/Nacht-Temperaturen 21 ± 2 / 17 ± 2 °C betragen.

10. Das Verfahren nach einem der vorhergehenden Ansprüche, wobei die Beleuchtung für die Chelidonium-Pflanze in Agrarsystemen mit kontrollierter Umgebung angewendet wird.

11. Das Verfahren nach einem der vorhergehenden Ansprüche, wobei die sekundären Metaboliten Alkaloide sind.

12. Das Verfahren nach Anspruch 11, wobei die Alkaloide Isochinolinalkaloide sind.

13. Das Verfahren nach Anspruch 12, wobei die Isochinolinalkaloide ausgewählt sind aus der Gruppe umfassend Chelidonin, Chelerythrin, Sanguinarin, Coptisin, Berberin.

## Revendications

1. Procédé pour augmenter la teneur en alcaloïdes dans une plante, le procédé comprenant :
la culture d'une plante de *Chelidonium majus* dans des systèmes agricoles en environnement contrôlé,
dans lequel la plante de *Chelidonium majus* est exposée à un spectre d'éclairage de base, consistant en un éclairage rouge (R) et bleu (B),
dans lequel l'éclairage de base est complété par de la lumière UVA et/ou de la lumière violette,
dans lequel le procédé d'éclairage est appliqué aux plantes de *Chelidonium majus* depuis le stade de semis ou de plantule et dure jusqu'à ce que la croissance de la biomasse végétale atteigne une phase de plateau, mais pas moins de 30 jours à partir du moment du semis, et
moyennant quoi au moins la teneur totale en alcaloïdes isoquinoléiques de la plante est augmentée.

2. Le procédé selon la revendication 1, dans lequel la lumière bleue a une longueur d'onde d'environ 455 ± 15 nm et la proportion de lumière bleue est de 5 à 15 % de la densité de flux de photons photosynthétiques totale.

3. Le procédé selon la revendication 1, dans lequel la lumière rouge a une longueur d'onde d'environ 660 ± 15 nm et la proportion de lumière rouge est de 85 à 95 % de la densité de flux de photons photosynthétiques totale.

4. Le procédé selon la revendication 1, dans lequel la lumière UVA a une longueur d'onde dans la plage d'environ 340 nm à 400 nm, de préférence une lumière de 385-390 nm.

5. Le procédé selon la revendication 1, dans lequel la lumière violette a une longueur d'onde dans la plage d'environ 400 nm à 405 nm, de préférence de 402 nm.

6. Le procédé selon l'une quelconque des revendications précédentes, dans lequel la plante de *Chelidonium majus* est exposée à des lumières rouge et bleue pendant une photopériode de 16 h.

7. Le procédé selon l'une quelconque des revendications précédentes, dans lequel la lumière UVA et/ou violette a une intensité de 1 à 2 mW cm⁻² pendant une photopériode de 8 h.

8. Le procédé selon l'une quelconque des revendications précédentes, dans lequel la photopériode de la lumière UVA-violette est placée au centre de la photopériode de l'éclairage de base.

9. Le procédé selon l'une quelconque des revendications précédentes, dans lequel les températures jour/nuit sont de 21 ± 2 / 17 ± 2 °C.

10. Le procédé selon l'une quelconque des revendications précédentes, dans lequel l'éclairage est appliqué à la plante de Chelidonium dans des systèmes agricoles en environnement contrôlé.

11. Le procédé selon l'une quelconque des revendications précédentes, dans lequel les métabolites secondaires sont des alcaloïdes.

12. Le procédé selon la revendication 11, dans lequel les alcaloïdes sont des alcaloïdes isoquinoléiques.

13. Le procédé selon la revendication 12, dans lequel les alcaloïdes isoquinoléiques sont choisis dans le groupe comprenant la chélidonine, la chélérythrine, la sanguinarine, la coptisine et la berbérine.
